# EUROPÄISCHE PATENTSCHRIFT

(11) **EP 0 508 164 B1**
(45) Veröffentlichungstag und Bekanntmachung des Hinweises auf die Patenterteilung: **27.12.1995**
(21) Anmeldenummer: 92104565.4
(22) Anmeldetag: 17.03.1992
(51) Int. Cl.: F02M 21/04, F23D 14/60

(54) **Vorrichtung zur Regelung der Menge und/oder des Mischungsverhältnisses eines Brenngas-Luft-Gemisches**
Device for controlling the flow rate and/or the mixing rate of a gaseous fuel-air mixture
Dispositif de contrôle du débit et/ou du rapport de mélange d'un mélange combustible gazeux-air

(30) Priorität: 30.03.1991 DE 4110516
(43) Veröffentlichungstag der Anmeldung: 14.10.1992
(73) Patentinhaber: Ruhrgas Aktiengesellschaft, 45117 Essen (DE)
(72) Erfinder: Korsmeier, Wilhelm, W-4350 Recklinghausen (DE); Wolf, Dieter, W-4270 Dorsten (DE); Wehling, Heinz Bernhard, W-4270 Dorsten (DE)
(74) Vertreter: Hosbach, Hans Ulrich

(56) Entgegenhaltungen:
- EP-A- 0 316 454
- DE-A- 3 526 608
- DE-A- 3 611 909
- NL-A- 6 514 104
- US-A- 2 792 292
- PATENT ABSTRACTS OF JAPAN vol. 10, no. 238 (M-508)16. August 1986 & JP-A-61 070 161

## Beschreibung

Die Erfindung bezieht sich auf eine Vorrichtung zur Regelung der Menge und/oder des Mischungsverhältnisses eines Brenngas-Luft-Gemisches nach dem Oberbegriff des Patentanspruchs 1.

Eine derartige Regelvorrichtung ist aus der NL-A-65 14 104 bekannt. Sie bietet nicht die Möglichkeit einer Voreinstellung des Mischungsverhältnisses, was allerdings aus der US-A-2 799 292 bekannt ist. Darüber hinaus läßt die Intensität des Mischvorganges zu wünschen übrig, da nämlich der Gasregelquerschnitt vom Luftregelquerschnitt relativ weit entfernt liegt. Auch wird die Luft radial, und damit nicht optimal in das Gehäuse eingeleitet.

Ferner zeigt die DE-A-35 26 608 eine Regelvorrichtung, bei der durch Verdrehen eines rohrförmigen Regelschiebers im Vorrichtungsgehäuse der Gasregelquerschnitt zur Veränderung des Mischungsverhältnisses verstellbar ist und durch kolbenartiges Verschieben des Regelschiebers gleichzeitig beide Regelquerschnitte zur Veränderung der Gemischmenge verstellbar sind. Bei dieser bekannten Regelvorrichtung tritt der geregelte Gasstrom in den Hohlraum des Regelschiebers ein, der mit einem offenen Rohrende in eine in dem Vorrichtungsgehäuse vor dem Gemischauslaß untergebrachte Mischeinrichtung ausmündet, in der der geregelte Gasstrom beim Verlassen des Regelschiebers erst mit dem in die Mischeinrichtung eintretenden geregelten Luftstrom zur Gemischbildung zusammentrifft. Für die Durchmischung wird Energie verbraucht, und zusätzlich zu den Drosselverlusten, die in den Regelquerschnitten für Gas und Luft durch die Regelung entstehen, verursacht deshalb bei dieser bekannten Regelvorrichtung die Mischeinrichtung mit dem erforderlichen Energieverbrauch für die Durchmischung der in ihr zusammentreffenden geregelten Ströme von Gas und Luft nochmals einen Druckabfall. Weiterhin erfordert die Bauart dieser bekannten Regelvorrichtung abzudichtende Gleit- und Führungsflächen zwischen dem Vorrichtungsgehäuse und dem in ihm verdrehbar und kolbenartig verschiebbar gelagerten Regelschieber. Aus der DE-A-36 11 909 ist eine andere Bauart einer Regelvorrichtung der eingangs genannten Art bekannt, bei der der Luftregelquerschnitt zwischen den im Gehäuseinnenraum gegenüberliegenden Rändern eines den Gemischauslaß bildenden festen Rohrstutzens und eines im Gehäuseinnenraum längsverschiebbaren und mit dem Gaseinlaß verbundenen Gehäuseinnenrohres gebildet ist und der Gasregelquerschnitt zwischen diesem Gehäuseinnenrohr und einem in ihm längsverschiebbaren Regelschieber gebildet ist. Hierdurch liegen die beiden Regelquerschnitte derart dicht im Gehäuse beieinander, daß sie praktisch gemeinsam sogleich die Stelle des Gehäuseinnenraumes bilden, an der die Zusammenführung und Vermischung der geregelten Ströme von Luft und Gas stattfindet. Hiermit wird bei dieser bekannten Regelvorrichtung erreicht, daß der beim Regeln in den beiden Regelquerschnitten entstehende Druckabfall bzw. Drosselverlust sogleich in Mischenergie umgesetzt und zur Durchmischung von Gas und Luft genutzt wird und ein gesonderter Mischer mit nochmaligem Aufwand bzw. Verbrauch an Energie für die Gemischbildung eingespart werden kann. Die Bauart dieser bekannten Regelvorrichtung macht es aber notwendig, zwei gesonderte Stellantriebe für eine individuelle Querschnittsveränderung beider Regelquerschnitte vorzusehen, um durch eine gleichzeitige Verstellung des Gas- und des Luftregelquerschnitts eine Veränderung der Gemischmenge vorzunehmen, wozu es die Bauart dieser bekannten Regelvorrichtung außerdem notwendig macht, das längsverschiebbare Gehäuseinnenrohr und den längsverschiebbaren Gasregelschieber zur Veränderung der Gemischmenge gegenläufig in dem Vorrichtungsgehäuse zu verschieben.

Die Erfindung hat zur Aufgabe, insbesondere für Gas-Gebläsebrenner, mit denen übliche Heizkessel von Gebäudeheizungsanlagen betrieben werden, eine einfach und kostengünstig herstellbare Regelvorrichtung zu schaffen, die sowohl eine zusätzliche Mischeinrichtung für die energieverbrauchende Durchmischung von Gas und Luft überflüssig macht als auch mit nur einem Stellantrieb eine zwangsläufig gemeinsame Verstellung beider Regelquerschnitte zur Gemischmengenveränderung erlaubt und hierbei mit berührungslos mit dem Gehäuse zusammenwirkenden und besondere Gleitabdichtungen vermeidenden Gas- und Luftregelorganen eine solche Gemischmengenveränderung ermöglicht, mit der ein Regelbereich von 10 % bis 100 % der Nennleistung des Gasbrenners erreicht werden kann und bei der das Gemisch je nach den Anforderungen der Praxis ein über den Regelbereich konstant bleibendes Mischungsverhältnis oder ein sich änderndes, den unterschiedlichen Leistungsstufen des Regelbereichs angepaßtes Mischungsverhältnis aufweist.

Diese Aufgabe wird gemäß der Erfindung in erster Linie durch die im Patentanspruch 1 angegebenen Merkmale der Regelvorrichtung gelöst. Vorteilhafte Ausführungsformen der erfindungsgemäßen Regelvorrichtung sind in den Unteransprüchen gekennzeichnet.

Im folgenden wird anhand der Zeichnung ein Ausführungsbeispiel für die erfindungsgemäße Regelvorrichtung näher erläutert. Es zeigt
Figur 1 die Regelvorrichtung in einem axialen Schnitt;
Figur 2 eine Einzelheit der Regelvorrichtung der Figur 1 in einer anderen Ausführungsform;
Figur 3 im Querschnitt und Figur 4 im Längsschnitt einen Teil der Vorrichtung in einer vorteilhaften Ausgestaltung;
Figur 5 im Querschnitt einen Teil der Vorrichtung in einer weiteren vorteilhaften Ausgestaltung.

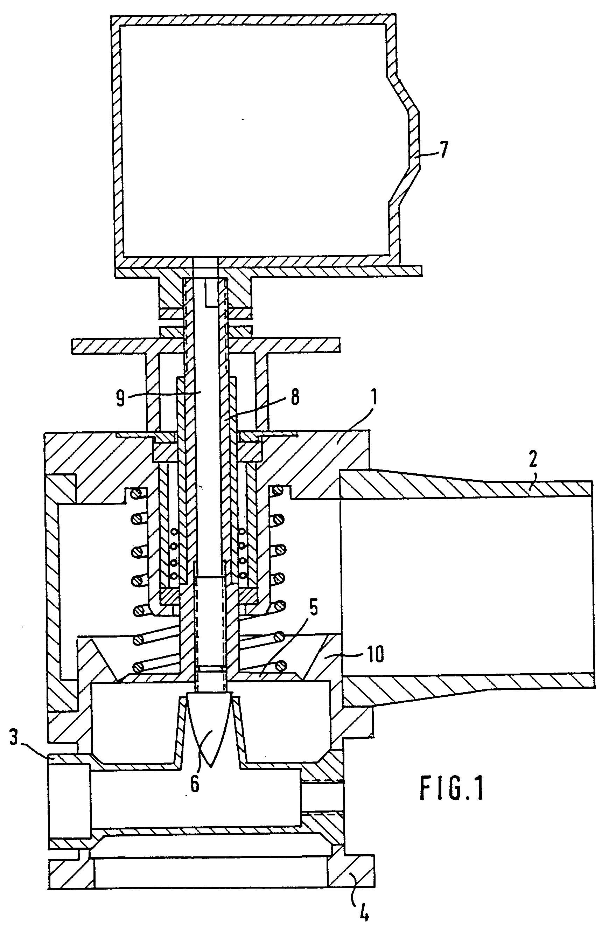

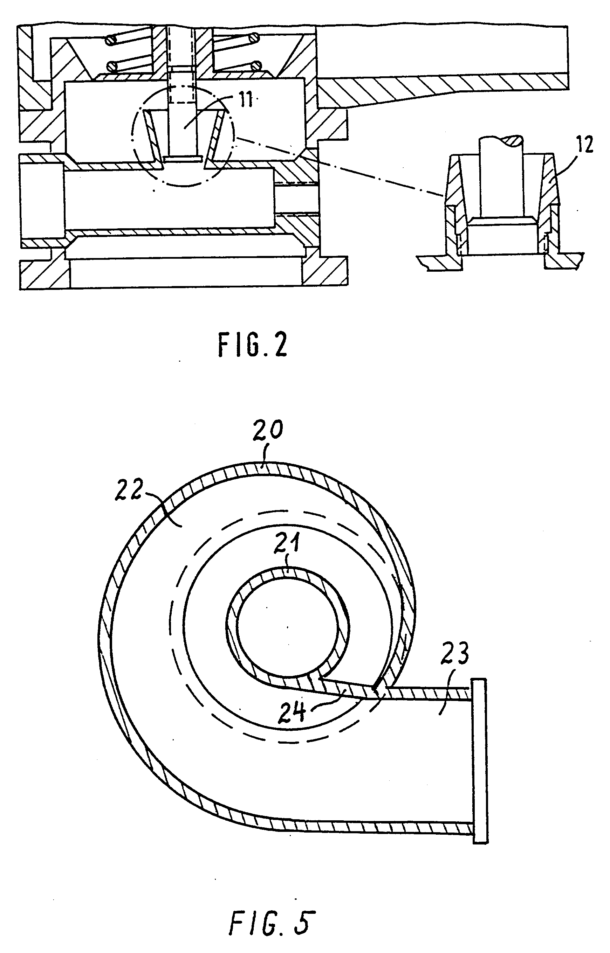

Das Gehäuse 1 der Regelvorrichtung besitzt einen Lufteinlaß 2, einen Gaseinlaß 3 und einen Gemischauslaß 4. In dem Gehäuse 1 befinden sich ein mit einem Luftregelorgan 5 veränderbarer Luftregelquerschnitt und ein mit einem Gasregelorgan 6 veränderbarer Gasregelquerschnitt. Die beiden Regelorgane 5 und 6 sind zur gemeinsamen und gleichzeitigen Verstellung mittels eines gemeinsamen Regelantriebes 7 mechanisch miteinander verbunden und zur Voreinstellung eines bestimmten Mischungsverhältnisses von Gas und Luft gegeneinander verstellbar. Das Luftregelorgan 5 ist an einer in dem Gehäuse 1 längsverschiebbaren Stellhülse 8 angeordnet, die aus dem zwischen dem Lufteinlaß 2 und dem Luftregelquerschnitt liegenden Teil des Gehäuseinnenraumes zu dem Regelantrieb 7 herausgeführt ist, so daß an dieser Gehäusedurchführung kein Austritt von Gas bzw. Gemisch verhindert zu werden braucht. In der Stellhülse 8 ist eine Stellspindel 9 angeordnet, die abgedichtet durch das Luftregelorgan 5 hindurchragt und an der in der Luftströmungsrichtung hinter dem Luftregelquerschnitt das Gasregelorgan 6 angebracht ist. Die Stellspindel 9 ist durch ein Gewinde mit der Stellhülse 8 gekuppelt, so daß bei einer Verstellung von Stellhülse 8 und Luftregelorgan 5 mittels des Regelantriebes 7 die Stellspindel 9 und das Gasregelorgan 6 mitgenommen werden und dadurch eine Veränderung der Gemischmenge erfolgt. Die Stellspindel 9 kann durch Verdrehen in dem Gewinde gegenüber der Stellhülse 8 längsverschoben werden, um dadurch das Mischungsverhältnis der von den beiden Regelquerschnitten hindurchgelassenen Medien voreinzustellen. Beide Regelquerschnitte haben kegelförmige Begrenzungswandungen Bei dem dargestellten Ausführungsbeispiel ist der Luftregelquerschnitt von einer in Luftströmungsrichtung kegelförmig sich verengenden Gehäusewandung 10 begrenzt und ist der Durchlaßquerschnitt des Luftregelquerschnitts mit einem tellerförmigen Luftregelorgan 5 veränderbar. Der Gasregelquerschnitt wird bei der Ausführungsform der Figur 1 von einem im wesentlichen kegelförmigen Gasregelorgan 6 begrenzt. Die Kegelwinkel der Gehäusewandung 10 und des Gasregelorgans 6 sind derart aufeinander abgestimmt, daß bei einer gemeinsamen Verstellung beider Regelorgane 5 und 6 die von den beiden Regelquerschnitten hindurchgelassenen Mengen an Gas und Luft ein für jede Verstellposition der beiden Regelorgane vorbestimmtes Mischungsverhältnis ergeben. Die beiden Kegelwinkel können so aufeinander abgestimmt sein, daß das durch Verdrehen der Stellspindel 9 gegenüber der Stellhülse 8 voreingestellte Mischungsverhältnis über den Bereich der Gemischmengenregelung bzw. Leistungsregelung konstant bleibt, die beiden Kegelwinkel können aber auch so aufeinander abgestimmt werden, daß sich das Mischungsverhältnis von einem vorbestimmten Wert z. B. bei der größten geregelten Gemischmenge auf einen vorbestimmten anderen Wert z. B. bei der kleinsten geregelten Gemischmenge verändert. Außerdem kann z. B. durch die nach einer vorbestimmten Funktionskurve gekrümmte Kegelform des Gasregelorgans 6 für das Mischungsverhältnis in den verschiedenen Verstellpositionen beider Regelorgane dem Umstand Rechnung getragen werden, daß das Gas in der Praxis meistens unter einem konstanten Zufuhrdruck dem Gaseintritt 3 zuströmt, hingegen die Fördermenge eines normalen Brennergebläses von dem durch die Drosselwirkung des Luftregelquerschnitts erzeugten Gegendruck abhängt und sich nicht proportional zur Größe der Durchlaßöffnung des Luftregelquerschnitts verhält. Bei der in Figur 2 gezeigten Ausführungsform wird auch für den Gasregelquerschnitt ein tellerförmig ausgebildetes Gasregelorgan 11 angewendet und ist die Gasregelöffnung von einem Rohrteil 12 begrenzt, das analog wie die die Luftregelöffnung begrenzende Gehäusewandung 10 sich in der öffnungsrichtung des Regelorgans kegelförmig erweitert und das lösbar und austauschbar in dem Gehäuse 1 angeordnet ist. Mit dieser Auswechselbarkeit des Rohrteils 12 kann der Kegelwinkel und damit das Durchlaßquerschnittsverhältnis von Gasregelquerschnitt und Luftregelquerschnitt in den Verstellpositionen der Gasregelvorrichtung beispielsweise unterschiedlichen Gasarten, wie z. B. Erdgas oder Propangas, angepaßt werden. Im Zusammenhang mit der mechanischen Verbindung des Luftregelorgans und des Gasregelorgans, damit beide Regelorgane zur Gemischmengenveränderung zwangläufig gemeinsam mit einem einzigen Antrieb verstellt werden können, liegen zwar der Luftregelquerschnitt und der Gasregelquerschnitt in Luftströmungsrichtung hintereinander in dem Gehäuse 1. Die beiden Regelquerschnitte sind aber derart angeordnet und zueinander ausgerichtet, daß die aus ihnen austretenden geregelten Ströme von Gas und Luft in einer möglichst kurzen Entfernung von der Austrittsseite beider Regelquerschnitte zur Vermischung aufeinandertreffen, so daß der in beiden Regelquerschnitten entstehende Druckabfall in an sich bekannter Weise sogleich in Mischenergie umgesetzt wird und zur intensiven Durchmischung des Gasstromes und des Luftstromes genutzt wird. Hierzu ist bei dem dargestellten Ausführungsbeispiel der Gasregelquerschnitt so ausgebildet, daß seine Gasausströmrichtung der Austrittsseite des Luftregelquerschnitts zugewendet ist und die Austrittsseite des Gasregelquerschnitts auch möglichst nahe bei der Austrittsseite des Luftregelquerschnitts liegt. Der nahe an der Austrittsseite beider Regelquerschnitte liegende Mischort von Gas und Luft wird auch durch die Kegelwinkel der Gehäusewandung 10 und des Gasregelorgans 6 respektive des Rohrteiles 12 bestimmt, durch die der geregelte Luftstrom und der geregelte Gasstrom eine entgegengesetzt gerichtete kegelartige Strömungsform erhalten.

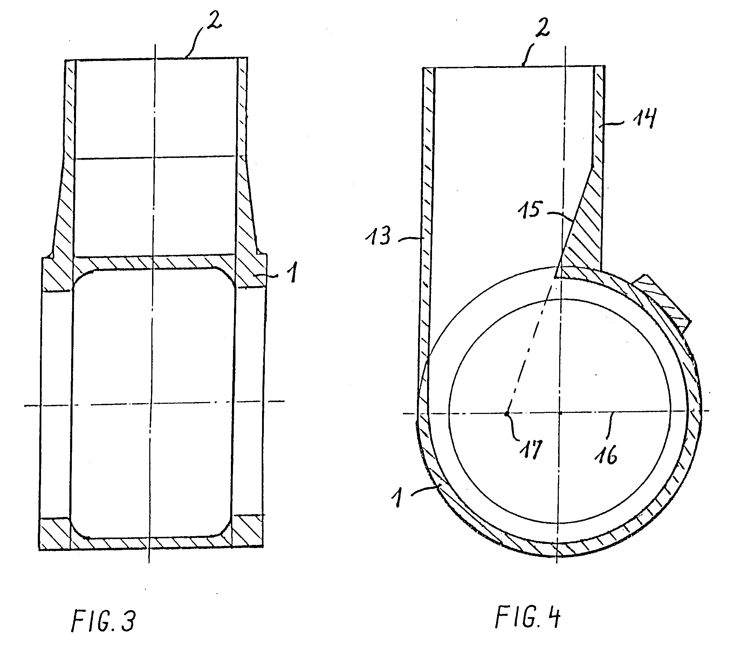

Bei der in den Figuren 3 und 4 dargestellten, besonders vorteilhaften Ausbildung der Vorrichtung hat das Gehäuse 1 die Form eines im Querschnitt runden Zylinders, dessen Längsachse durch die Mitte des mittels des Luftregelorgans 5 veränderbaren Luftregelquerschnitts verläuft. Der Lufteinlaß 2 der Vorrichtung besteht aus einem Stutzen, der seitlich an dem Gehäusezylinder 1 angeordnet ist und tangential in den Zylinderinnenraum einmündet. Durch diese Anordnung wird der Luftstrom beim Eintritt in den Innenraum des Gehäusezylinders 1 in eine Rotation versetzt, die sich auch noch durch den Luftregelquerschnitt hindurch fortsetzt und dadurch die Vermischung von Gas und Luft unterstützt und infolgedessen die Mischzone, die für die vollständige Gemischbildung in der Vorrichtung benötigt wird, verkürzt. In besonders zweckmäßiger Weise erfolgt die tangentiale Einmündung in der Weise, daß die äußere Wand 13 des Lufteinlaßstutzens 2 geradlinig auf die Außenkontur der zylindrischen Gehäusewand zuläuft und daß die gegenüberliegende Wand 14 des Lufteinlaßstutzens zunächst parallel zu der Wand 13 verläuft und sodann in einem Abstand von der Wandung des Gehäusezylinders abgewinkelt ist und derart bis zum Gehäusezylinder weiterführt, daß eine gedankliche Verlängerung der abgewinkelten Wand 15 die Durchmesserlinie 16 des Gehäusezylinders in einem Punkt 17 schneidet, der vom Mittelpunkt des Gehäusezylinders um etwa ein Fünftel des Innendurchmessers des Gehäusezylinders entfernt ist.Vorteilhafterweise wird weiterhin beim Übergang des Lufteintrittsstutzens 2 in den Gehäusezylinder 1 der rohrförmig runde Querschnitt des Lufteintrittsstutzens in eine rechteckige Einmündungsöffnung des Stutzens in den Gehäusezylinder verändert.

Die Figur 5 zeigt eine bevorzugte, noch günstigere Ausbildung der Vorrichtung. In dem Gehäuse ist auf der Eintrittsseite des Luftregelquerschnitts zwischen der im wesentlichen zylinderförmigen Gehäuseaußenwand 20 und einer zylinderförmigen Gehäuseinnenwand 21, welche die Mittellinie des Luftregelquerschnitts bzw. des in der Figur 1 dargestellten Luftregelorgans 5 umgibt, ein in Gehäuseumfangsrichtung sich erstreckender Luftkanal 22 ausgebildet. In diesen Luftkanal 22 mündet ein ähnlich wie in der Figur 3 seitlich und tangential am Gehäuse angeordneter Lufteintrittsstutzen 23 ein. Der Querschnitt des Luftkanals 22 ist jedoch in der Umfangsrichtung des Gehäuses durch eine neben der Einmündung des Lufteintrittsstutzens 23 angeordnete, im wesentlichen radiale Gehäusezwischenwand 24 unterbrochen. Die durch den Lufteintrittsstutzen 23 in das Gehäuse eintretende Luft wird in dem Luftkanal 22 in eine Drallströmung versetzt. Während der Durchströmung des Luftkanals 22 in Umfangsrichtung strömt Luft von dem Luftkanal 22 in Achsrichtung des Gehäuses in den angrenzenden Luftregelquerschnitt. Die an der Gehäusezwischenwand 24 noch ankommende Drallströmung wird durch entsprechende Ausbildung dieser Gehäusequerwand in Gehäuseachsrichtung entlang einer Funktionskurve in den Luftregelquerschnitt gedrückt. Der Luftkanal 22, der über seine gesamte Umfangslänge zur Eintrittsseite des Luftregelquerschnitts offen ist, besitzt eine von der Einmündung des Lufteintrittsstutzens 23 bis zu der radialen Gehäusezwischenwand 24 kontinuierlich abnehmende lichte radiale Weite. Diese Abnahme der radialen Querschnittsweite des Luftkanals 22 ist vorzugsweise so bemessen, daß die Drallströmung in dem Luftkanal 22, von der während der Strömung von der Einmündung des Lufteintrittsstutzens bis zu der Gehäusezwischenwand 24 zunehmend Luft in Gehäuseachsrichtung durch den Luftregelquerschnitt abströmt, eine gleichmäßige, im wesentlichen gleichbleibende Strömungsgeschwindigkeit in Gehäuseumfangsrichtung hat. Die Unterbrechung des Luftkanalquerschnitts in Gehäuseumfangsrichtung durch die Gehäusezwischenwand 24 führt zu dem Vorteil, daß die Drallströmung in dem Luftkanal 22 nicht wieder auf die durch den Lufteintrittsstutzen 23 ankommende neue Luft auftrifft und deshalb an der Einmündung des Lufteintrittsstutzens 23 kein Luftstau entsteht, der an dem der Einmündung des Eintrittsstutzens benachbarten Bereich des Luftregelquerschnitts das Zusammenführen von Luft mit Gas stören würde und dadurch die Homogenität des zu bildenden Gemisches beeinträchtigt.

## Patentansprüche

1. Vorrichtung zum Regeln der Menge und/oder des Mischungsverhältnisses eines Brenngas-Luft-Gemisches, mit einem Gehäuse (1), das einen Lufteinlaß (2), einen Gaseinlaß (3) und einen Gemischauslaß (4) aufweist, einem im Gehäuse mittels eines Gasregelorgans (6) veränderbaren Gasregelquerschnitt und einem im Gehäuse mittels eines Luftregelorgans (5) veränderbaren Luftregelquerschnitt, wobei das Gehäuse (1) im wesentlichen die Form eines Zylinders hat, dessen Längsachse durch die Mitte des Luftregelquerschnitts verläuft, wobei die beiden Regelorgane (5, 6) zur gemeinsamen und gleichzeitigen Verstellung durch einen gemeinsamen Regelantrieb (7) mechanisch miteinander verbunden sind und wobei jeder Regelquerschnitt von mindestens einer im wesentlichen kegelförmigen Fläche begrenzt wird, deren Kegelwinkel an den beiden Regelquerschnitten derart aufeinander abgestimmt sind, daß bei der gemeinsamen Veränderung beider Regelquerschnitte die von ihnen hindurchgelassenen Mengen an Gas und Luft ein für jede Verstellposition der Regelorgane (5, 6) vorbestimmtes Mischungsverhältnis ergeben, dadurch gekennzeichnet, daß die beiden Regelorgane (5, 6) zur Voreinstellung eines bestimmten Mischungsverhältnisses von Gas und Luft entlang der Längsachse des Gehäuses (1) relativ zueinander verstellbar sind, daß die beiden Regelquerschnitte derart in dem Gehäuse (1) angeordnet und zueinander ausgerichtet sind, daß die aus ihnen austretenden geregelten Ströme von Gas und Luft in einer möglichst kurzen Entfernung von der Austrittsseite beider Regelquerschnitte zur Vermischung aufeinander treffen, und daß der Lufteinlaß (2) aus einem Stutzen besteht, der seitlich an dem Gehäuse angeordnet ist und tangential in den Zylinderinnenraum einmündet.

2. Vorrichtung nach Anspruch 1, dadurch gekennzeichnet, daß in dem Gehäuse (1) auf der Austrittsseite einer in Luftströmungsrichtung kegelförmig sich verengenden und mit einem tellerförmigen Luftregelorgan (5) zusammenwirkenden Luftregelöffnung (10) koaxial eine Gasregelöffnung (12) ausgebildet ist, deren Austrittsseite in der Nähe der Austrittsseite der Luftregelöffnung (10) liegt und deren Gasausströmrichtung gegen die Austrittsseite der Luftregelöffnung gerichtet ist.

3. Vorrichtung nach Anspruch 2, dadurch gekennzeichnet, daß das Gasregelorgan (11) tellerförmig ausgebildet ist und die Gasregelöffnung (12) aus einem in der öffnungsrichtung des Gasregelorgans kegelförmig sich erweiternden Rohrteil besteht, das lösbar und austauschbar in dem Gehäuse (1) angeordnet ist.

4. Vorrichtung nach Anspruch 2 oder 3, dadurch gekennzeichnet, daß das Luftregelorgan (5) an einer in dem Gehäuse (1) längsverschiebbaren Stellhülse (8) angeordnet ist, die vorzugsweise aus dem zwischen dem Lufteinlaß (2) und der Luftregelöffnung (10) des Gehäuses liegenden Teil des Gehäuseinnenraumes durch das Gehäuse zu einem Regelantrieb (7) herausgeführt ist, und daß in der Stellhülse eine abgedichtet durch das Luftregelorgan hindurchragende Stellspindel (9) angeordnet ist, an der das Gasregelorgan (6) angebracht ist, wobei die Stellspindel (9) durch ein Gewinde mit der Stellhülse (8) in deren Verschieberichtung gekuppelt ist und durch Verdrehen in dem Gewinde gegenüber der Stellhülse längsverschiebbar ist.

5. Vorrichtung nach einem der Ansprüche 1 bis 4, dadurch gekennzeichnet, daß der Stutzen des Lufteinlasses (2) mit einer rechteckigen Einmündungsöffnung in den Zylinderinnenraum des Gehäuses (1) einmündet.

6. Vorrichtung nach einem der Ansprüche 1 bis 4, dadurch gekennzeichnet, daß in dem Gehäuse auf der Eintrittsseite des Lufregelquerschnitts zwischen der Gehäuseaußenwand (20) und einer die Mittellinie des Luftregelquerschnitts umgebenden Gehäuseinnenwand (21) ein in Gehäuseumfangsrichtung sich erstreckender Luftkanal (22) ausgebildet ist, in den der tangential am Gehäuse angeordnete Lufteinlaßstutzen (23) einmündet und dessen Querschnitt in der Umfangsrichtung des Gehäuses durch eine neben der Einmündung des Lufteinlaßstutzens angeordnete , im wesentlichen radiale Gehäusezwischenwand (24) unterbrochen ist, und daß der Luftkanal (22) über seine gesamte Umfangslänge zur Eintrittsseite des Luftregelquerschnitts offen ist und eine von der Einmündung des Lufteinlaßstutzens in der Umfangsrichtung bis zu der Gehäusezwischenwand (24) kontinuierlich abnehmende lichte radiale Weite aufweist.

## Claims

1. A device for controlling the flow rate and/or the mixing ratio of a combustible gas/air mixture, with a body (1) exhibiting an air inlet (2), a gas inlet (3) and a mixture outlet (4), with a cross-sectional area for gas control which can be modified in the body by means of a gas control mechanism (6) and a cross-sectional area for air control which can be modified in the body by means of an air control mechanism (5), wherein the body (1) has substantially the form of a cylinder whose longitudinal axis runs through the centre of the cross-sectional area for air control, wherein the two control mechanisms (5, 6) are mechanically connected with each other for joint and simultaneous adjustment by means of a joint control drive (7) and wherein each control cross-sectional area is limited by at least one substantially conical surface, whose cone angles at the two control cross-sectional areas are matched to each other in such a manner that, when the two control cross-sectional areas are changed together, the amounts of gas and air which they allow to pass result in a predetermined mixing ratio for each setting of the control mechanisms (5, 6), characterised in that the two control mechanisms (5, 6) are adjustable relative to each other along the longitudinal axis of the body (1) for presetting a certain mixing ratio of gas to air, that the two control cross-sectional areas are disposed in the body (2) and aligned with each other in such a manner that the controlled flows of gas and air which leave therefrom meet for mixing at as short a distance as possible from the outlet side of both control cross-sectional areas, and that the air inlet (2) consists of a stub, which is arranged on the side of the body and ends tangentially in the interior of the cylinder.

2. A device according to claim 1, characterised in that, in the body (1) on the outlet side of an air control orifice (10) which narrows in the shape of a cone in the direction of air flow and acts together with a plate-shaped air control mechanism (5), a gas control orifice (12) is coaxially arranged, whose outlet side is located near the outlet side of the air control orifice (10), the gas flowing from the outlet side of said gas control orifice (12) being directed towards the outlet side of the air control orifice.

3. A device according to claim 2, characterised in that the gas control mechanism (11) is plate-shaped and the gas control orifice (12) consists of a pipe section which extends in the shape of a cone in the opening direction of the gas control mechanism, said pipe section being arranged in the body (1) in a detachable and exchangeable manner.

4. A device according to claim 2 or 3, characterised in that the air control mechanism (5) is arranged on an setting sleeve (8) which can be displaced longitudinally in the body (1), said setting sleeve being preferably passed out of the part of the body interior located between the air inlet (2) and the air control orifice (10) through the body to a control drive (7), and that a setting spindle (9) protruding through the air control mechanism in a sealed manner is arranged in said setting sleeve, the gas control mechanism (6) being arranged on said setting spindle (9), wherein the setting spindle (9) is linked by a thread to the setting sleeve (8) in its direction of adjustment and can be moved longitudinally in relation to the setting sleeve by twisting it in the thread.

5. A device according to any one of claims 1 through 4, characterised in that the stub of the air inlet (2) terminates in a rectangular opening in the cylinder interior of the body (1).

6. A device according to any one of claims 1 through 4, characterised in that, in the body on the inlet side of the cross-sectional area for air control between the body exterior wall (20) and a body interior wall (21) surrounding the centreline of the cross-sectional area for air control, an air duct (22) is formed stretching in the circumferential direction of the body, the air inlet stub (23) arranged tangentially on the body terminating in said air duct and the cross-section of said air duct in the circumferential direction of the body being interrupted by a substantially radial body partition wall (24) arranged next to the point where the air inlet stub terminates, and that the air duct (22) is open along its entire circumferential length towards the inlet side of the cross-sectional area for air control and exhibits a radial inside diameter which continually narrows from the termination of the air inlet stub in the circumferential direction to the body partition wall (24).

## Revendications

1. Dispositif de contrôle du débit et/ou du rapport de mélange d'un mélange combustible gazeux-air, avec un carter (1) présentant une entrée d'air (2), une entrée de gaz (3) et une sortie de mélange (4), une section de réglage de gaz variable à l'aide d'un organe de réglage de gaz (6) et une section de réglage d'air variable à l'aide d'un organe de réglage d'air (5), le carter (1) ayant essentiellement la forme d'un cylindre dont l'axe longitudinal passe au milieu de la section de réglage d'air, les deux organes de réglage (5, 6) étant, pour le réglage commun et simultané, mécaniquement liés l'un à l'autre par un dispositif de commande commun (7), chaque section de réglage étant délimitée d'au moins une surface essentiellement conique dont les angles de cône aux deux sections de réglage sont accordés entr'eux de la sorte que, lors d'une variation commune des deux sections de réglage, les quantités de gaz et d'air laissé passées forment, pour chaque position des organes de réglage (5, 6), un mélange prédéterminé, caractérisé par le fait que les deux organes de réglage (5, 6) peuvent être réglés relativement l'un par rapport à l'autre le long de l'axe du carter (1) pour l'ajustage d'un rapport de mélange déterminé, que les deux sections de réglage sont disposés et accordés dans le carter (1) de la sorte que les flux de gaz et d'air réglés par celles-ci se rencontrent pour être mélangés à une distance la plus courte possible du côté sortie des deux sections de réglage, et que l'entrée d'air (2) consiste en une tubulure disposée à la partie latérale du carter et débouchant tangentiellement dans l'intérieur du cylindre.

2. Dispositif selon la revendication 1, caractérisé par le fait que dans le carter (1) côté sortie est formée, coaxialement à une ouverture de réglage d'air (10) agissant avec un organe de réglage d'air (5) en forme de disque, une ouverture de réglage de gaz (12) se rétrécissant coniquement en direction du flux d'air et dont le côté sortie est situé à proximité du côté sortie de l'ouverture de réglage d'air (10), la direction de flux de gaz étant dirigé vers le côté sortie de l'ouverture de réglage d'air.

3. Dispositif selon la revendication 2, caractérisé par le fait que l'organe de réglage de gaz (11) a la forme d'un disque et que l'ouverture de réglage de gaz (12) consiste en un tuyau s'élargissant coniquement en direction de l'ouverture de l'organe de réglage de gaz et étant disposé dans le carter (1) de façon détachable et échangeable.

4. Dispositif selon l'une des revendications 2 ou 3, caractérisé par le fait que l'organe de réglage d'air (5) est disposé à une douille de réglage (8) pouvant être déplacée longitudinalement dans le carter (1) et qui, de préférence, passe de la partie intérieur du carter entre l'entrée d'air (2) et l'ouverture de réglage d'air (10) à travers le carter vers une motorisation (7), et que dans la douille de réglage est disposée une tige de réglage (9), redue étanche par l'organe de réglage d'air, où est disposé l'organe de réglage de gaz (6), la tige de réglage (9) étant accouplée à la douille de réglage (8) par un filetage en direction de déplacement de celle-ci et pouvant être déplacée longitudinalement par rapport à la douille de réglage en la tournant dans le filetage.

5. Dispositif selon l'une des revendications 1 à 4, caractérisé par le fait que la tubulure de l'entrée d'air (2) débouche dans l'intérieur du cylindre du carter (1) avec une ouverture rectangulaire.

6. Dispositif selon l'une des revendications 1 à 4, caractérisé par le fait que dans le carter côté entrée de la section de réglage d'air entre la paroi extérieure du carter (20) et la paroi intérieure du carter (21) enveloppant la ligne centrale de la section de réglage d'air est formé un canal d'air (22) circonférentiel par rapport au carter dans lequel débouche la tubulure d'entrée d'air (23) et dont la section est interrompue en direction circonférentielle du carter par une paroi intermédiaire (24) essentiellement radiale, disposée à côté de l'entrée de la tubulure d'air, et que le canal d'air (22) est ouvert vers la partie entrée de la section de réglage d'air sur toute sa longueur et présente à partir de l'entrée de la tubulure d'air en direction corconférentielle jusqu'à la paroi intermédiaire du carter (24) un diamètre intérieur radial diminuant continuellement.
